# EUROPEAN PATENT SPECIFICATION

(11) **EP 2 698 612 B1**
(45) Date of publication and mention of the grant of the patent: **28.03.2018**
(21) Application number: 12006827.5
(22) Date of filing: 01.10.2012
(51) Int. Cl.: G01D 5/48

(54) **Extended stroke position sensor**
Erweiterter Hubpositionssensor
Capteur de position de course étendue

(30) Priority: 14.08.2012 US 201261682818 P
(43) Date of publication of application: 19.02.2014
(73) Proprietor: Hamlin Electronics Europe Ltd., Broadland Business Park Norwich, Norfolk, NR7 0WH (GB)
(72) Inventor: Johnson, Brian, Norwich Norfolk NR7 0WG (GB)
(74) Representative: Gislon, Gabriele

(56) References cited:
- EP-A2- 2 233 894
- DE-A1-102004 057 769
- US-A- 4 604 576
- US-A- 4 749 936

## Description

### BACKGROUND AND SUMMARY OF THE INVENTION

The present invention generally relates to position sensors and more particularly to an elongated or extended stroke position sensor comprising a waveguide and magnet.

Most non-contacting position sensors are based on Hall or magnetostrictive technology. The effective maximum stroke length is limited to about 20mm; beyond 20mm the ability to linearly sense the magnetic field strength limits the performance of the Hall sensor in terms of sensitivity and accuracy. This means more expensive and complex measurement systems are needed. This is particularly relevant when dealing with the measurement of the position of a piston In a cylinder; in most configurations of magnetic sensors this would mean the length of the magnet would be approximately the same length as the stroke, hence the cylinder size would have to be increased to include such a sensor.

The prior art has shown a magnetostrictive magnet-waveguide solution. A circular magnet is positioned about a magnetostrictive waveguide; the position of the circular magnet identifies the position to be measured. An electric wire extends the length of the waveguide. A pulse of current is placed upon the wire, which creates another magnetic field, which interferes with the circular magnet magnetic field thereby creating a torque pulse located at the position of the circular magnet. The time it takes for the torque pulse to move to a sensor head is correlated with the position of the circular magnet. US patent 5,717,330 is representative of the above magnetostrictive magnet-waveguide solution.

As can be appreciated the torque pulse moves down the waveguide at the speed of sound. While the speed is relatively fast, if the magnet is placed on a fast-moving machine head measurement inaccuracles will be produced. The present invention solves the problem with the prior art.

US 4,749,936 A discloses a piston monitoring apparatus and a method for monitoring position of a piston in a linear hydraulic actuator. Said piston monitoring apparatus includes a phase detector, a RF oscillator coupled to a resistor Rs, which is coupled to a transmission line. Said linear hydraulic actuator includes an actuator piston with a shaft and a wire, which is centrally supported within a hollow cylindrical tube. Said wire and tube form inner and outer conductors of the coaxial transmission line having an air dielectric. Said transmission line is terminated within the piston rod and cylinder of the actuator. A bead of magnetically permeable material is freely slidably carried on the wire within the tube. An annular magnet, which is carried on the axial face of the piston, externally surrounds the tube and is magnetically coupled to said bead thereby the bead is magnetically drawn along wire in function of motion of the piston within the cylinder of the actuator. When ferrite bead forms an impedance discontinuity along the center conductor of the transmission line, the RF radiation is reflected. The reflected wave combines with the signal wave to generate a phase shift in the voltage vector. This phase shift at detector is linearly proportional to piston position.

Other position sensors using other forms of waveguides have also been proposed in the prior art, many of these sensors rely on the interaction with the local environment as they are primarily used to detect level of liquids, for example US5,249,463 by Schlumberger. This characteristic is avoided in the present invention. The present invention is specifically designed to measure the position of a target magnet and is electrically shielded from the external environment and includes a magnetic media which is primarily affected by the field from the magnet. This means the accuracy of the present invention is not affected when it is operated in environments which contain oil or other liquids. The present invention relates to a method of determining position of the body, in particular relative to a certain datum and/or a certain element, according to claim 1; the invention also relates to a system according to claim 4. In greater detail, the present invention relates to an extended length sensor comprising a waveguide using a spiral-wound connector. The sensor employs a signal generator and signal receiver preferably located at one end of the waveguide. A quantity of magnetically soft material, in the form of a sheet or cylinder, is placed in proximity with the waveguide which is carrying an input signal. The sensor preferably includes a shielding layer using an electrically conductive material such as copper which shields the sensor from the external environment and helps contain the electrical and magnetic field within the sensor, thereby reducing any EM-radiation emitted by the sensor. The sensor includes a small magnet to induce a localized full or partial magnetic saturation in the magnetic material. The magnet is closely positioned, typically less than 6mm - 10mm and is relatively movable to the waveguide. The local saturation in the magnetic material causes an impedance discontinuity in the waveguide and creates a reflection point for a signal in the waveguide. Measuring the phase angle between the radio frequency (RF) input wave and the reflected wave allows the position of the magnet relative to the waveguide to be determined. Additionally, if the input signal is a single pulse or series of pulses the signal receiver or cooperating controller will be able to calculate the time of travel of the incident pulse to the point of magnetic saturation (the reflection point) and the return time which is proportional to the position of the magnet relative to the waveguide/magnetic sheet. As will be seen from the description below, the control circuitry compares the time between the rising edge of the input pulse and the time of receipt of the reflected wave.

### Brief Description of the Drawings

- Figure 1 shows the major components of one embodiment of the present invention.
- Figure 2 shows more details of a simple waveguide.
- Figure 3 shows the details of another embodiment of a waveguide.
- Figures 4 and 5 show a further embodiment of a waveguide.
- Figures 6 and 7 show still another version of a waveguide.
- Figures 8 and 9 show another embodiment of the invention.
- Figure 10 shows a further embodiment of the invention.

### Detailed Description of the Drawings

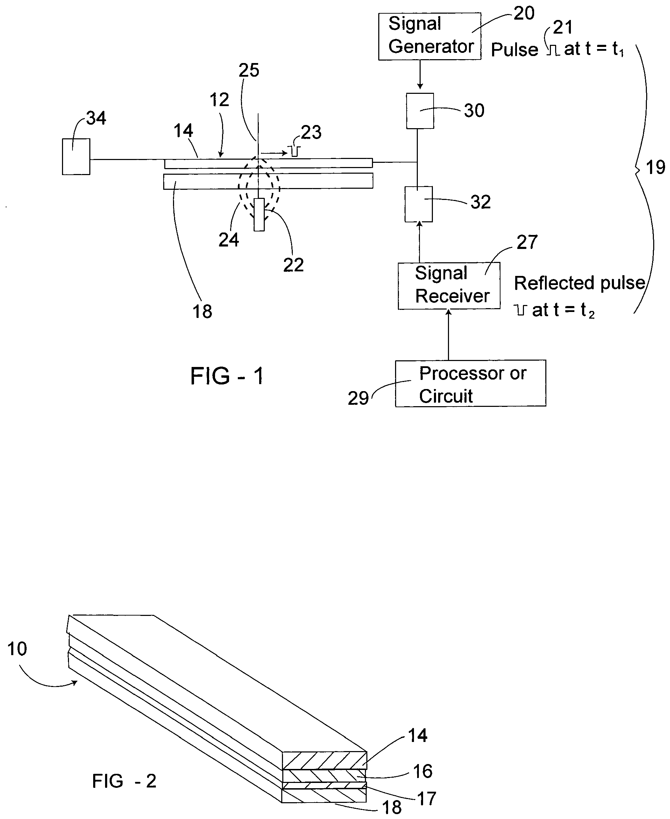

Figure 1 diagrammatically represents an extended stroke position sensor 10 as well as a sensing system 10A incorporating the sensor 10. Sensor 10 comprises a waveguide 12 which can comprise a microstrip, stripline waveguide or even a rectangular waveguide that is formed by at least a single conductive strip 14, for example copper. The sensor 10 further includes a thin sheet of soft or semi-soft magnetic material 18 positioned in close proximity to the waveguide 12. A magnet 22 such as a permanent magnet (or electro-magnet) is movable relative to the waveguide 12, 14 and magnetic strip 18. The sensor 10 or sensing system 10A additionally includes control electrics 19 which can be packaged with the waveguide and magnetic strip 18 or separate therefrom.

Figure 1 inherently illustrates a distance measuring technique performed by the complementary sensing system 10A. If signal generator 20 is a pulse generator which periodically issues a single pulse or series of pulses 21 generated at a time t + t1, a reflected pulse 23 is generated at the point of impedance discontinuity in the waveguide 22. This point of impedance discontinuity, i.e. the location of magnet 22, is generally shown by a dotted line and numeral 25; this pulse will be sensed by the signal receiver 27 at time t = t2. The time difference between incident and reflective pulses is a measure of the position of the magnet 22 in relation to the waveguide 14 as determined in processor 29. For example, in one environment, the magnet 22 or waveguide and magnetic material can be affixed to a movable object such a movable head, such as a sewing head, a laser, a welding tip or a liquid float. The other of the magnet and waveguide and magnetic material can secured to a cooperating structure.

A signal generator 20 and signal receiver 29 are operatively connected to the wave guide 12, i.e. to the conductive strip 14. The magnet 22 is of sufficient strength to generate a magnetic field 24 capable of completely or partially magnetically saturating the magnetic sheet of material 18, which as mentioned is closely spaced relative to the waveguide. Magnet 22 can be a permanent magnet or electromagnet. The waveguide 12 and the sheet of magnetic material 18 are preferably fixed relative to one another. The waveguide has a given value of impedance, however, the characteristic impedance of the waveguide is strongly affected by the permeability of the material surrounding it, such as the magnetic material 18. The sensing system 10A includes various elements shown as blocks 30, 32 and 34 diagrammatically illustrating known types of impedance matching devices. When the impedance of the waveguide is not accurately matched to its load or to the source, or if a discontinuity is created in the impedance of the waveguide, a reflected wave, originating at the point of the discontinuity will result. This reflected wave 23 is reflected toward an end of the waveguide. Figure 2 shows a more complicated version of the sensor 10. In this embodiment, sensor 10 has a conductive layer 14 and substrate 16, wherein the substrate 16 has a conductive metal or conductive metalized rear sheet or layer 17. A thin sheet of soft or semi-soft magnetic material 18 is positioned adjacent the metalized sheet 17. To enhance the shielding effects of the layer 17 it may be grounded.

In the present invention, the introduction of the magnet 22 into an impedance matched system comprising the waveguide, magnetic material and impedance matching devices reduces the permeability of the magnetic material 18, this reduction being proportional to the strength of the magnet 22. If the magnet 22 is sufficiently strong, this reduction in permeability can approach zero in the limit. Thus the magnetic field of magnet 22 creates a localized, significant change in the characteristic impedance of the waveguide by changing the permeability of the magnetic material. This change results in a discontinuity in the effective impedance of the waveguide such that a travelling wave is reflected back to the source (or receiver) from this point of discontinuity. For example the air gap or spacing between the waveguide and magnetic material is in the range of 0 mm to 15 mm. Generally, a semi-soft magnetic material is one characterized by a magnetic saturation field Hₛ ranging from 100A/m to 3000 A/m, and a soft magnetic material, having a magnetic saturation field Hₛ ranging from 3 A/m to 100 A/m.

Another benefit of the present invention is the magnetic material 18 effectively shields the waveguide 12 from disturbances created in a local environment, which is a deficiency of the Schlumberger patent. Additionally, the magnetic material 18 functions to contain the electric and magnetic waves in the waveguide to reduce interaction with the environment. For example, if the waveguide is used as a liquid level sensor and partially immersed in a liquid without the magnetic material, the impedance of the waveguide would be unmatched and reflections would occur. With the magnetic material positioned on or close to the waveguide, the magnetic material shields the waveguide from external disturbances, the consequence of which is the impedance mismatch is effectively caused only by the introduction of the magnetic field of the magnet which creates the above-mentioned reflected wave. One important point is that the waveguide will be matched so that there are no reflections when a magnet is not present. As can be appreciated, the magnetic material does more than shield the waveguide; it is a functional part of the sensing system.

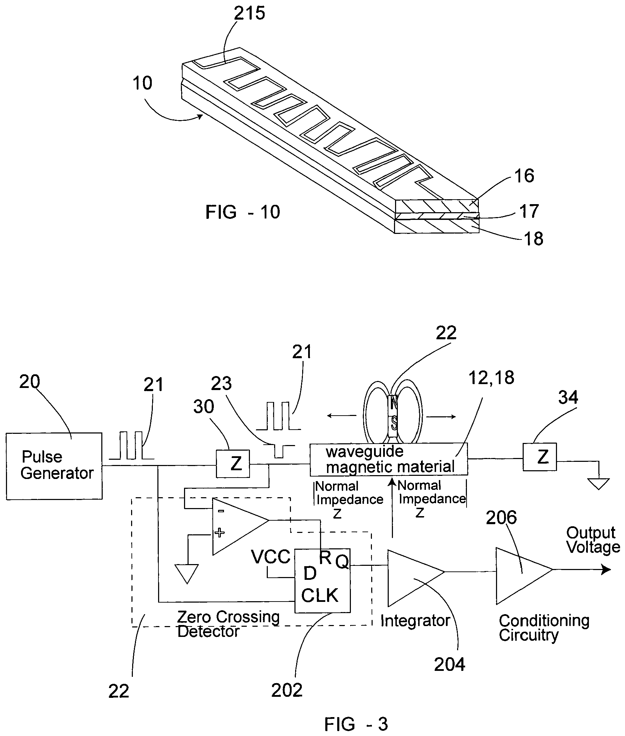

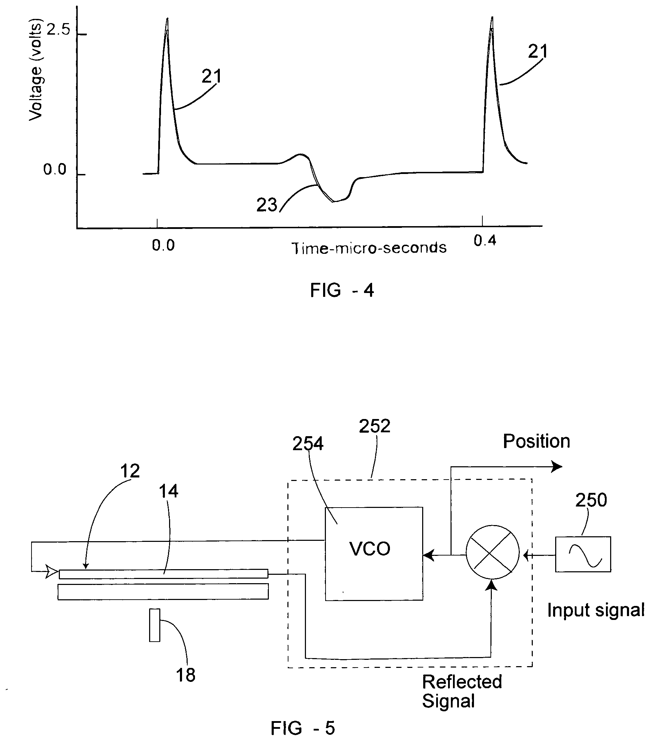

Figure 3 shows a more detailed version of the system of figure 1. In figure 3, a pulse generator 20 issues a pulse or series of pulses to the waveguide 12, the magnet 18 is schematically positioned below the waveguide and opposite a magnet 22. The magnet 22 is shown at a midpoint of the waveguide/magnet with its characteristic impedance shown equally distributed. Impedance matching impedances 30 and 34 are also shown. The signal receiver 27 is realized as a zero crossing detector using an amplifier 200 and d-type flip-flop. In this setup the reflected pulse 23 is a negative pulse and the flip-flop is set on the rising edge of the input pulse 21 and is reset after the reflated pulse 23 crosses zero. The processor 29 of figure 1 is realized by an integrator 204 and conditioning circuit 206. Figure 4 shows sample waveforms generated by the system 10A at the driven end of the waveguide.

Reference is made to figure 5 which shows a variation of the system in figure 1. Here the signal generator is shown as a periodic waveform generator 250 and the signal receiver as well known phase detector 252 which includes a voltage controlled oscillator (VCO) 254. The output of the phase detector is a signal representative of the phase difference between the periodic reference signal 21 having a frequency f1 and the reflected, return or feedback signal 23, also having a frequency f1, but displaced in phase relative to the reference signal. The output of the VCO 32 is a constant amplitude signal having a frequency that varies with measured phase difference between the reference signal and the output or a feedback signal SF. In essence, by measuring the phase between the initial time of the reference signal and the reflected signal allows the position of the magnet relative to the waveguide to be determined.

In the preferred embodiment the thickness of the magnetic material 22 from the waveguide is in the range of approximately 0.1mm to 10mm; 1mm appears to be preferred.

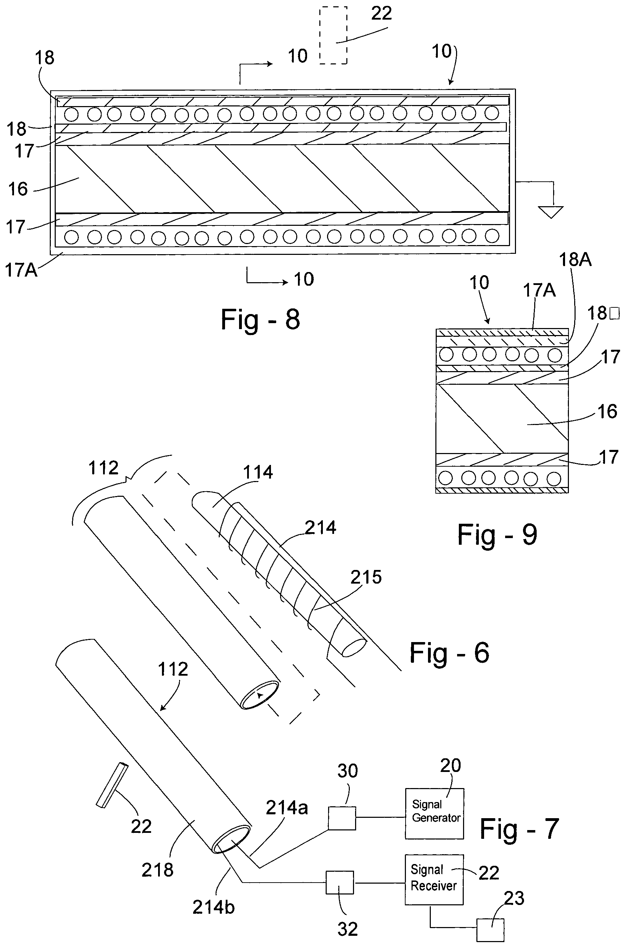

Reference is made to figures 6 and 7 which show an embodiment of the present invention. The waveguide 112 is constructed with a central copper core 114 with a second conductor, such as wire 214 wound about the core in a spiral 215. The extended length of the wire wound effectively has the benefit of creating a longer waveguide in a smaller package. Additionally, the use of the spiral wound second conduction 214 provides an increased mechanical efficiency where a small linear movement of the magnet along the axis of the waveguide corresponds to a longer distance the reflected wave has to travel along the spiral. This construction has a benefit for improving accuracy and slowing down the pulses and making the electronics simpler to realise.

Figure 7 shows the core 114 and conductor 214 positioned within a cylindrical housing formed of a soft or semi-soft magnetic material 218. The ends of the wire 214a and 214b are respectively connected to impedance matching devices and to a signal generator and signal receiver.

Figures 8 and 9 show a further embodiment of sensor 10. In this sensor 10, the substrate 16 is covered top and bottom with a thin conductive layer 17 which further isolates the waveguide from the environment. The side of the sensor 10 facing the magnet is referred to as the active side. Sensor 10 further includes a first magnet layer 18. A wire coil 215 spirally envelopes the first layer of magnetic material 18, layers 17 and the substrate. Wire 215 should be insulated from the layers 17, for example the wire could include an electrically insulative coating. A second layer of magnet material 18A covers the wire 215 on the active side of the sensor 10. The above structure is further covered by a thin layer of conductive material 17A, for example, a thin copper sheet or tape or foil. Additionally, the distance between the magnet and the active side of the sensor should be sufficient to locally saturate the waveguide and, depending upon the strength of the magnet, may be about 6mm.

Figure 10 shows another embodiment of sensor 10 comprised of a substrate 16 with the magnetic material on the underneath side of the substrate. The conductive layer 17 of figure 3 has been replaced by a conductor 215A shaped in a zigzag or spiral-like configuration which is etched or otherwise deposited on the substrate. This construction yields a waveguide having an effective length similar to the one shown in figure 6.

Many changes and modifications in the above-described embodiment of the invention can, of course, be carried out without departing from the scope thereof.

Accordingly, that scope is intended to be limited only by the scope of the appended claims.

## Claims

1. A method of determining position of a body, utilizing the system comprising:
a waveguide (12,112) having a given length having an effective impedance, the waveguide (12,112) is positioned in close proximity to a cylinder of soft or semi-soft magnetic material (218), the waveguide (112) comprising a copper core (114) with a connector spiral (215) wound about the core (114), the core (114) and connector receivable within the cylinder of magnetic material (218),
a magnet which may be a permanent magnet or electro-magnet (22) closely positioned to the magnetic material (218) and configured to locally fully or partially saturate the magnetic material (218),
a signal generator for generating a determinable first signal; and
a signal receiver for measuring a characteristic of the first signal or its reflection;
the method comprising:
a) generating the first signal and communicating the first signal to the waveguide (112).
b) causing a relative motion between i) the waveguide (112) and the magnetic material (218) and ii) the magnet (22),
c) creating a reflection point in the waveguide (112) to reflect the first signal at the relative location of the magnet (22) by changing the effective impedance of the waveguide (112) at the current relative location of the magnet (22),
wherein the cylinder of magnetic material (218) encases the waveguide (112).

2. The method according to claim 1, including the step of
d) measuring one of i) the phase difference between a first signal and its reflection at a determinable location along the waveguide (112) and ii) measuring the time delay between the generation of the first signal and receipt of the reflection of the first signal and iii) correlating the phase difference or time delay with the relative position of the magnet (22).

3. The method according to claim 1 or 2, wherein the strength of the magnet (22) is greater than a preset value to overcome measurement anomalies resulting from temperature or variation in air gap between the waveguide(112)_and the magnetic material (218), wherein the first signal is a radio frequency (RF) signal.

4. A system comprising:
a waveguide (112) having a given length with an effective impedance;
a cylinder of soft or semi-soft magnetic material (218), the waveguide (112) being positioned in close proximity to the cylinder of soft or semi-soft magnetic material(218), the waveguide (112) comprising a copper core (114) with a connector spiral (215) wound about the core (114), the core (114) and connector receivable within the cylinder of magnetic material (218):
a magnet (22), movable relative to the waveguide (112) and magnetic material (218), comprising either a permanent magnet or electro-magnet (22) closely positioned to the magnetic material (218) and configured to generate a local magnetic field sufficient to locally saturate the magnetic material (218), wherein the local magnetic field configures to create a reflection point on the waveguide (112) to reflect a first signal;
a signal generator (20, 40) for impressing a determinable first signal upon the waveguide (112) at a first location; and
a signal receiver (22, 42), located proximate the first position for sensing a characteristic of the first signal or its reflection;
a processor or electric circuit for correlating the sensed characteristic to the relative position of the magnet (22),
wherein the cylinder of magnetic material (218) encases the waveguide (112).

5. The system according to claim 4 wherein the waveguide (12, 112) includes an electrical screen.

6. The system according to claim 4, wherein the first signal is a radio frequency (RF) signal.

7. The system according to claim 4, wherein the cylinder of magnetic material (18, 218) is made from soft or semi-soft magnetic material (18, 218).

## Patentansprüche

1. Verfahren zum Bestimmen der Position eines Körpers unter Verwendung des Systems, umfassend:
einen Wellenleiter (12, 112) mit einer gegebenen Länge mit einer effektiven Impedanz, wobei der Wellenleiter (12, 112) in unmittelbarer Nähe zu einem Zylinder aus weichem oder halbweichem magnetischem Material (218) angeordnet ist, wobei der Wellenleiter (112) einen Kupferkern (114) mit einer um den Kern (114) gewundenen Verbinderspirale (215) aufweist, wobei der Kern (114) und der Verbinder in dem Zylinder aus magnetischem Material (218) aufnehmbar sind;
einen Magneten, der ein Permanentmagnet oder ein Elektromagnet (22) sein kann, der nahe an dem magnetischen Material (218) angeordnet ist und konfiguriert ist, um das magnetische Material (218) örtlich vollständig oder teilweise zu sättigen;
einen Signalgenerator zum Erzeugen eines bestimmbaren ersten Signals; und
einen Signalempfänger zum Messen einer Charakteristik des erstes Signals oder dessen Reflexion;
wobei das Verfahren umfasst:
a) Erzeugen des ersten Signals und Übermitteln des ersten Signals an den Wellenleiter (112),
b) Bewirken einer relativen Bewegung zwischen i) dem Wellenleiter (112) und dem magnetischen Material (218) und ii) dem Magneten (22),
c) Erzeugen eines Reflexionspunktes in dem Wellenleiter (112), um das erste Signal an der relativen Position des Magneten (22) zu reflektieren durch Ändern der effektiven Impedanz des Wellenleiters (112) an der aktuellen relativen Position des Magneten (22),
wobei der Zylinder aus magnetischem Material (218) den Wellenleiter (112) umgibt.

2. Verfahren nach Anspruch 1, umfassend den Schritt d) Messen eines von i) der Phasendifferenz zwischen einem ersten Signal und dessen Reflexion an einer bestimmbaren Position entlang des Wellenleiters (112) und ii) Messen der Zeitverzögerung zwischen der Erzeugung des ersten Signals und dem Empfang der Reflexion des ersten Signals und iii) Korrelieren der Phasendifferenz oder der Zeitverzögerung mit der relativen Position des Magneten (22).

3. Verfahren nach Anspruch 1 oder 2, wobei die Stärke des Magneten (22) größer als ein voreingestellter Wert ist, um Messanomalien zu überwinden, die sich aus der Temperatur oder der Schwankung im Luftspalt zwischen dem Wellenleiter (112) und dem magnetischen Material (218) ergeben, wobei das erste Signal ein Radiofrequenzsignal (RF) ist.

4. System, umfassend:
einen Wellenleiter (112) mit einer gegebenen Länge mit einer effektiven Impedanz;
einen Zylinder aus weichem oder halbweichem magnetischem Material (218), wobei der Wellenleiter (112) in unmittelbarer Nähe zu dem Zylinder aus weichem oder halbweichem magnetischem Material (218) angeordnet ist,
wobei der Wellenleiter (112) einen Kupferkern (114) mit einer um den Kern (114) gewundenen Verbinderspirale (215) aufweist, wobei der Kern (114) und der Verbinder in dem Zylinder aus magnetischem Material (218) aufnehmbar sind;
einen Magneten (22), der in Bezug auf den Wellenleiter (112) und magnetisches Material (218) bewegbar ist, welcher ein Permanentmagnet oder ein Elektromagnet (22) sein kann, welcher nahe an dem magnetischen Material (218) angeordnet ist und konfiguriert ist, um ein lokales magnetisches Feld zu erzeugen, welches ausreichend ist, um das magnetische Material (218) örtlich zu sättigen, wobei das lokale magnetische Feld konfiguriert ist, um einen Reflexionspunkt auf dem Wellenleiter (112) zu erzeugen, um ein erstes Signal zu reflektieren;
einen Signalgenerator (20, 40) zum Einprägen eines bestimmbaren ersten Signals auf den Wellenleiter (112) an einer ersten Position; und
einen Signalempfänger (22, 42), der nahe der ersten Position lokalisiert ist, zum Erfassen einer Charakteristik des ersten Signals oder dessen Reflexion; ein Prozessor oder eine elektrische Schaltung zum Korrelieren der gemessenen Charakteristik mit der relativen Position des Magneten (22),
wobei der Zylinder aus magnetischem Material (218) den Wellenleiter (112) umgibt.

5. System nach Anspruch 4, wobei der Wellenleiter (12, 112) einen elektrischen Bildschirm umfasst.

6. System nach Anspruch 4, wobei das erste Signal ein Radiofrequenzsignal (RF) ist.

7. System nach Anspruch 4, wobei der Zylinder aus magnetischem Material (18, 218) aus einem weichen oder halbweichen magnetischen Material (18, 218) besteht.

## Revendications

1. Procédé de détermination de la position d'un corps, utilisant le système comprenant :
un guide d'onde (12, 112) ayant une longueur donnée ayant une impédance efficace, le guide d'onde (12, 112) étant placé à proximité immédiate d'un cylindre d'un matériau magnétique souple ou semi-souple (218), le guide d'onde (112) comprenant un noyau de cuivre (114) avec un connecteur en spirale (215) enroulé autour du noyau (114), le noyau (114) et le connecteur pouvant loger à l'intérieur du cylindre de matériau magnétique (218),
un aimant qui peut être un aimant permanent ou un électro-aimant (22) placé au plus près du matériau magnétique (218) et configuré pour saturer localement le matériau magnétique (218) de manière totale ou partielle,
un générateur de signal pour générer un premier signal pouvant être déterminé ; et
un récepteur de signal pour mesurer une caractéristique du premier signal ou de sa réflexion ; le procédé comprenant :
a) la génération du premier signal et la transmission du premier signal au guide d'onde (112),
b) le fait de provoquer un mouvement relatif entre i) le guide d'onde (112) et le matériau magnétique (218) et ii) l'aimant (22),
c) la création d'un point de réflexion dans le guide d'onde (112) pour réfléchir le premier signal à l'emplacement relatif de l'aimant (22) en modifiant l'impédance efficace du guide d'onde (112) à l'emplacement relatif actuel de l'aimant (22),
dans lequel le cylindre de matériau magnétique (218) renferme le guide d'onde (112).

2. Procédé selon la revendication 1, comprenant l'étape de
d) mesure de l'un parmi i) la différence de phase entre un premier signal et sa réflexion à un emplacement pouvant être déterminé le long du guide d'onde (112) et ii) la mesure du délai entre la génération du premier signal et la réception de la réflexion du premier signal et iii) la corrélation de la différence de phase ou du délai avec la position relative de l'aimant (22).

3. Procédé selon la revendication 1 ou 2, dans lequel la puissance de l'aimant (22) est supérieure à une valeur prédéfinie pour contourner les anomalies de mesure résultant de la température ou des variations de l'entrefer entre le guide d'onde (112) et le matériau magnétique (218), dans lequel le premier signal est un signal de radiofréquence (RF).

4. Système comprenant :
un guide d'onde (112) ayant une longueur donnée avec une impédance efficace ;
un cylindre d'un matériau magnétique souple ou semi-souple (218), le guide d'onde (112) étant placé à proximité immédiate du cylindre d'un matériau magnétique souple ou semi-souple (218), le guide d'onde (112) comprenant un noyau de cuivre (114) avec un connecteur en spirale (215) enroulé autour du noyau (114), le noyau (114) et le connecteur pouvant loger à l'intérieur du cylindre de matériau magnétique (218) ;
un aimant (22), mobile par rapport au guide d'onde (112) et au matériau magnétique (218), comprenant un aimant permanent ou un électro-aimant (22) placé au plus près du matériau magnétique (218) et configuré pour générer un champ magnétique local suffisant pour saturer localement le matériau magnétique (218), dans lequel le champ magnétique local est configuré pour créer un point de réflexion sur le guide d'onde (112) pour réfléchir un premier signal ;
un générateur de signal (20, 40) pour imprimer un premier signal pouvant être déterminé sur le guide d'onde (112) à un premier emplacement ; et
un récepteur de signal (22, 42) situé à proximité de la première position pour détecter une caractéristique du premier signal ou de sa réflexion ;
un processeur ou un circuit électrique pour corréler la caractéristique détectée avec la position relative de l'aimant (22),
dans lequel le cylindre de matériau magnétique (218) renferme le guide d'onde (112).

5. Système selon la revendication 4 dans lequel le guide d'onde (12, 112) comprend un blindage électrique.

6. Système selon la revendication 4, dans lequel le premier signal est un signal de radiofréquence (RF).

7. Système selon la revendication 4, dans lequel le cylindre de matériau magnétique (18, 218) est réalisé dans un matériau magnétique souple ou semi-souple (18, 218) .
